# EUROPÄISCHE PATENTANMELDUNG

(11) **EP 4 239 311 A2**
(43) Veröffentlichungstag der Anmeldung: **06.09.2023**
(21) Anmeldenummer: 23181023.5
(22) Anmeldetag: 06.02.2013
(51) Int. Cl.: G01N 1/08, G01N 1/22

(54) **EXTRAKTIONSVORRICHTUNG**

(62) Teilanmeldung aus: 13405029.3
(71) Anmelder: CTC Analytics AG, 4222 Zwingen (CH)
(72) Erfinder: SCHILLING, Beat, 8038 Zürich (CH); SCHÜLER, Kai Heinrich, 9114 Hoffeld (CH); SCHILLIG, Christophe, 8625 Gossau (CH)
(74) Vertreter: Keller Schneider Patent- und Markenanwälte AG

(57) **Zusammenfassung**

Eine Vorrichtung (1) zur Extraktion eines Extraktionsgutes, insbesondere für eine Festphasenmikroextraktion, umfasst einen Extraktor (130) und eine Spitze (100) zum Durchdringen einer Trennschicht, wobei der Extraktor (130) mit der Spitze (100) verbunden ist. In einem Verfahren zur Extraktion eines Extraktionsgutes aus einem Behältnis mit einer Extraktionsvorrichtung (1) wird eine Trennschicht des Behältnisses mit einer Spitze (100) eines Extraktors (130) durchdrungen und das Extraktionsgut wird extrahiert.

## Beschreibung

### Technisches Gebiet

Die Erfindung betrifft eine Vorrichtung zur Extraktion eines Extraktionsgutes umfassend einen Extraktor und eine Spitze zum Durchdringen einer Trennschicht. Weiter betrifft die Erfindung ein Verfahren zur Extraktion eines Extraktionsgutes aus einem Behältnis mit einer Extraktionsvorrichtung.

### Stand der Technik

Die Festphasenmikroextraktion, oder auch SPME (solid phase micro extraction), ist seit Anfang der 90er Jahre bekannt. Der zentrale Teil der SPME-Vorrichtung ist typischerweise eine Faser oder Fiber. Diese kann in unterschiedlichen Formen vorliegen, wobei insbesondere die Polarität variiert wird. In Abhängigkeit der Polarität des Fiber-Materials kann im Verfahren ein Analyt mit im Wesentlichen derselben Polarität aus einer Matrix, welche sowohl gasförmig als auch flüssig sein kann, extrahiert werden. Der Analyt der Matrix reichert sich so an der Faser an, worauf der Analyt auf der Faser zum Beispiel in einen Gaschromatographen desorbiert und analysiert werden kann.

Die EP 0 794 822 B1 (Varian) betrifft die Mikroextraktion in der Festphase mit Vibration. Eine SPME-Spitze umfasst eine Nadel mit einer Fiber und einen Kolben mit einem Stössel. Mit der Nadel wird ein Septum eines Probenbehälters durchstochen. Nach der Probenaufnahme wird der Stössel zurückgefahren, womit die Fiber innerhalb der Schutzhülse in die Nadel zurückgeführt wird. Die Fiber ist innerhalb der Spritze befestigt und bewegt sich zusammen mit dem Kolben innerhalb des Zylinders. Die Hohlnadel ist mit dem Zylinder verbunden und enthält die Fiber. Die Faser streckt sich über das freie Ende der Nadel hinaus wenn der Kolben innerhalb des Zylinders herabgedrückt wird. Die Faser befindet sich innerhalb der Nadel, wenn der Kolben relativ zum Zylinder herausgezogen wird.

Auch die WO 91/15745 A1 (Supelco) und die WO 2007/032039 A2 (Degli) betreffen eine SPME-Vorrichtung, welche eine in einer Hohlnadel geführte Fiber umfasst. Im Verfahren wird auch jeweils mit der Hohlnadel ein Septum durchstochen und anschliessend zur Extraktion die Fiber aus der Hohlnadel verfahren.

Nachteilig bei den bekannten Vorrichtungen ist, dass die Fiber während des Verfahrens, insbesondere bei der Probenentnahme, beschädigt werden kann. Damit das Septum beim Durchstechen nicht beschädigt wird, resp. nicht ein Stück des Septums "ausgestanzt" wird, darf der Nadeldurchmesser nicht zu gross sein. Dies bedeutet aber auch gleichzeitig, dass die Fiberobefläche und damit die mögliche Absorbtionsmenge des Analyten begrenzt ist.

### Darstellung der Erfindung

Aufgabe der Erfindung ist es, eine dem eingangs genannten technischen Gebiet zugehörende Vorrichtung zur Extraktion eines Extraktionsgutes zu schaffen, welche besonders einfach und robust aufgebaut ist.

Die Lösung der Aufgabe ist durch die Merkmale des Anspruchs 1 definiert. Gemäss der Erfindung ist der Extraktor mit der Spitze verbunden. Damit wird eine Beschädigung des Extraktors beim Einstechen in eine Trennschicht, zum Beispiel durch ein Septum, vermieden. Bei herkömmlichen Extraktionsvorrichtungen kann nämlich mit der Spitze, welche an der die Fiber umfassende Kanüle ausgebildet ist, die Fiber nicht direkt geschützt werden. Erfindungsgemäss wird nun der Extraktor eben durch diese Spitze beim Eindringen in eine Trennschicht geschützt. Damit ist natürlich nicht ausgeschlossen, dass der Extraktor zusätzlich in einer Kanüle mit einer Spitze geführt ist. In diesem Fall könnte die Spitze des Extraktors das Eindringen in eine Trennschicht lediglich vereinfachen.

In bekannten Extraktionsvorrichtungen ist die Spitze jeweils durch eine Kanüle bereitgestellt, in welcher der Extraktor verfahrbar gelagert ist. Dadurch, dass erfindungsgemäss die Spitze nun mit dem Extraktor verbunden ist, wird eine Extraktionsvorrichtung erreicht, welche insbesondere bei eng dimensionierten Verhältnissen einsetzbar ist. Da die Spitze mit dem Extraktor verbunden ist, kann nämlich auf die Kanüle verzichtet werden. Allenfalls kann stattdessen eine einfachere, kostengünstigere und/oder kleiner dimensionierte Hülse vorgesehen sein. Damit kann die Extraktionsvorrichtung gesamthaft kompakter und kostengünstiger hergestellt werden.

Bei den bekannten Extraktionsvorrichtungen, umfassend eine Kanüle mit einer Spitze und einem in der Kanüle verfahrbaren Extraktor, besteht jeweils die Gefahr, dass ein Stück einer Trennschicht ausgestanzt wird. Daher weisen Kanülen solcher Extraktionsvorrichtungen jeweils eine möglichst kleine Querschnittsfläche auf, womit der Extraktor einen entsprechend kleinen Querschnitt aufweisen muss. Da nun erfindungsgemäss der Extraktor mit der Spitze verbunden ist, kann nun ein Extraktor mit grösserem Querschnitt vorgesehen sein, ohne die Gefahr eines Ausstanzens der Trennschicht in Kauf nehmen zu müssen. Damit kann wiederum eine aktive Oberfläche des Extraktors grösser gewählt werden, insbesondere um einen Faktor zwischen 5 und 20, typischerweise ungefähr um einen Faktor 10, womit schliesslich die Empfindlichkeit der Extraktion etwa proportional vergrössert werden kann.

Weiter kann damit weitgehend verhindert werden, dass Trennschichtpartikel in die Extraktionsvorrichtung gelangen und/oder Messresultate verfälschen können. Insbesondere können mit der Spitze, welche mit dem Extraktor verbunden ist, auch festere, harte, elastische oder dicke Trennschichten durchstochen werden.

Mit der Spitze kann nun auch ein Behälterboden berührt werden, ohne den Extraktor zu verschmutzen, womit sogenanntes "bottom sense", wobei der Boden eines Gefässes durch eine Berührung mit der Extraktionsvorrichtung (vorliegend eben mit der Spitze) erkannt wird, möglich wird.

Der Extraktor ist ausgebildet zum Extrahieren eines Extraktionsgutes aus einer Matrix, welche zum Beispiel als Lösung, Aerosol, Gasgemisch, Emulsion, Suspension und dergleichen vorliegen kann.

Die Spitze ist geeignet zum Durchdringen einer Trennschicht. Die Trennschicht kann dabei als eine feste oder flexible Schicht oder Behälterwandung ausgebildet sein. Diese Schicht kann aus einem Kunststoff wie zum Beispiel aus einem synthetischen Polymer oder Kautschuk bestehen. Weiter kann die Trennschicht auch zum Beispiel aus künstlichen oder natürlichen Fasern gewoben sein. Die Trennschicht kann aber auch zum Beispiel als Celluloseschicht oder dergleichen ausgebildet sein. Dem Fachmann sind auch weitere mögliche Trennschichten bekannt. Die Trennschicht kann zum Beispiel als Behälterwandung, als Deckel, insbesondere als Septum oder dergleichen vorliegen. Weiter können mit der Spitze auch mehr als eine Trennschicht durchdrungen oder auch durchstochen werden. Zum Beispiel können auch in Folie verpackte Probenbehälter mit Septa direkt durch die Folie und das Septum mit der Spitze durchdrungen werden.

Die Spitze weist vorzugsweise die Form eines Kreiskegels auf, wobei die Trennschicht mit der Spitze des Kreiskegels durchdrungen wird. Die Kreiskegelform ist besonders effektiv als Spitze und zudem einfach herzustellen.

In Varianten kann die Spitze aber auch anderweitig ausgebildet sein. Zum Beispiel kann die Spitze als Kegel mit polygonaler Grundfläche ausgebildet sein. Weiter kann die Spitze auch eine zugespitze Keilform aufweisen oder flächig ausgebildet sein. Die Spitze besteht vorzugsweise aus Vollmaterial, kann aber alternativ auch als Hohlkörper ausgebildet sein.

In einem Verfahren zur Extraktion eines Extraktionsgutes aus einem Behältnis werden die folgenden Schritte ausgeführt: Durchdringen einer Trennschicht des Behältnisses mit einer Spitze eines Extraktors sowie Extrahieren des Extraktionsgutes.

Bevorzugt umfasst die Extraktionsvorrichtung eine Führungshülse, in welcher der Extraktor in einer Führungsrichtung geführt ist. Damit wird eine besonders einfache Handhabung der Extraktionsvorrichtung ermöglicht, indem der Extraktor und die Führungsvorrichtung relativ zueinander in der Führungsrichtung verfahren werden. Der Einsatz der Führungshülse hat weiter den Vorteil, dass der Extraktor von einer Umgebung abgeschirmt werden kann, so dass ein Stoffaustausch zwischen der Umgebung und dem Extraktor behindert oder gar verhindert werden kann.

In Varianten kann auf die Führungshülse zum Führen des Extraktors auch verzichtet werden. In diesem Fall kann der Extraktor lediglich über sein proximales Ende mit einer Betätigungsvorrichtung versehen sein. Nach einem Adsorptionsvorgang kann der Extraktor zum Verhindern eines Stoffaustauschs mit der Umgebung auch mit einer Beschichtung versehen werden. Der Analysenvorgang kann auch in steriler Umgebung durchgeführt werden, so dass sich ein Verhindern eines Stoffaustauschs erübrigt.

Bevorzugt fluchten die Spitze und der Extraktor in die Führungsrichtung. Die Spitze ist damit mit einem distalen Ende des Extraktors verbunden. Wird der Extraktor nun in Richtung einer Trennschicht verfahren, so trifft die Spitze vorzugsweise zuerst auf die Trennschicht auf und durchdringt respektive durchsticht diese, so dass anschliessend der Extraktor möglichst schonend durch die Trennschicht geführt werden kann.

Alternativ kann auf die fluchtende Anordnung der Spitze zum Extraktor auch verzichtet werden.

Vorzugsweise wird nach dem Durchdringen der Trennschicht der Extraktor aus einer Führungshülse gefahren. Damit wird erreicht, dass während dem Durchdringen der Trennschicht der Extraktor durch die Führungshülse von der Umgebung abgeschirmt werden kann. Damit kann insbesondere ein Stoffaustausch zwischen der Umgebung und dem Extraktor vermieden werden.

In Varianten kann die Trennschicht auch durchdrungen werden, wenn der Extraktor ausserhalb der Führungshülse liegt. Dieses Verfahren kann insbesondere dann durchgeführt werden, wenn die Gefahr eines die Analyse verfälschenden Stoffaustauschs gering ist und wenn der Extraktor in Bezug auf die Trennschicht hinreichend robust ausgebildet ist.

Vorzugsweise wird nach der Extraktion der Extraktor in die Führungshülse gefahren, wobei insbesondere die Führungshülse mit der Spitze verschlossen wird. Damit wird nach der eigentlichen Extraktion ein Stoffaustausch des Extraktors mit der Umgebung vermieden.

In Varianten kann auf diesen Verfahrensschritt auch verzichtet werden.

Bevorzugt weist die Spitze rechtwinklig zur Führungsrichtung einen Aussendurchmesser auf, welcher grösser ist als ein rechtwinklig zur Führungsrichtung gemessener Aussendurchmesser des Extraktors. Mit dem Begriff "Aussendurchmesser" wird vorliegend ein grösster Durchmesser des Extraktors oder der Spitze in einer Ebene rechtwinklig zur Führungsrichtung verstanden. Insbesondere wenn der Extraktor und die Spitze in Führungsrichtung fluchtend angeordnet sind, hat dies den Vorteil, dass mit der Spitze eine Öffnung in der Trennschicht bereitgestellt werden kann, welche grösser ist als der rechtwinklig zur Führungsrichtung gemessene Aussendurchmesser. Damit kann der Extraktor besonders schonend durch die Trennschicht geführt werden, insbesondere ohne die Trennschicht zu kontaktieren. Damit können Beschädigungen des Extraktors vermieden werden.

In Varianten kann die Spitze auch rechtwinklig zur Führungsrichtung einen Aussendurchmesser aufweisen, welcher kleiner oder gleich dem entsprechenden Aussendurchmesser rechtwinklig zur Führungsrichtung des Extraktors ist. Dies kann zum Beispiel dann sinnvoll respektive ausreichend sein, wenn die Trennschicht nach dem Einstechen durch die Spitze derart geschwächt ist, dass ohne Gefährdung des Extraktors mit demselben das Einstichloch vergrössert werden kann. Weiter kann dies auch dann ausreichend sein, wenn der Extraktor relativ zur Trennschicht entsprechend robust ist.

In einer Variante, bei welcher die Spitze denselben Durchmesser wie der Extraktor aufweist, kann das distale Ende der Führungshülse derart abgeschrägt sein, dass sich die Spitze über die Führungshülse fortsetzt. Das heisst, die Führungshülse kann im distalen Bereich eine Aussenkontur eines Kreiskegelstumpfs aufweisen, wobei die Deckfläche des Kreiskegelstumpfs der Grundfläche der Spitze entspricht.

Vorzugsweise entspricht ein rechtwinklig zur Führungsrichtung gemessener Aussendurchmesser der Führungshülse dem rechtwinklig zur Führungsrichtung gemessenen Aussendurchmesser der Spitze. Diese Dimensionierung hat den Vorteil, dass bei in die Führungshülse eingefahrenem Extraktor die Spitze mit der Führungshülse fluchtet. Im Verfahren wird nun vorzugsweise der in die Führungshülse eingefahrene Extraktor in das Extraktionsgut eingeführt, wobei typischerweise mit der Spitze eine Trennschicht durchstochen wird. Da nun die Spitze seitlich, das heisst in Führungsrichtung, mit der Führungshülse fluchtet, wird verhindert, dass sich die Trennschicht an der Extraktionsvorrichtung verhaken kann. Damit kann die Extraktionsvorrichtung, insbesondere die Führungshülse und der Extraktor mit der Spitze, besonders schonend durch eine Trennschicht geführt werden. Besonders vorteilhaft ist diese Ausbildung wenn die Trennschicht als flexible, insbesondere elastische Trennschicht, zum Beispiel als elastische Membran oder dergleichen, ausgebildet ist, bei welchem sich die Grösse des durch die Spitze verursachten Loches jeweils dem eingeführten Gegenstand anpasst und nach dem Zurückfahren der Extraktionsvorrichtung gegebenenfalls wieder schliesst. Ein weiterer Vorteil besteht darin, dass die Spitze während des Eindringens durch die Führungshülse gestützt ist. Damit wird ein besonders robuster Betrieb der Extraktionsvorrichtung erreicht. Weiter kann damit die Spitze als Verschluss der Führungshülse dienen, womit zum einen beim Einstechen in die Trennschicht kein Material der Trennschicht zum Extraktor gelangen kann und zum andern ein Stoffaustausch mit der Umgebung vor und nach der Extraktion vermieden werden kann. Je nach Anwendungsgebiet kann zusätzlich eine Dichtung zwischen der Spitze und dem Führungsrohr vorgesehen sein, womit ein Stoffaustausch zwischen Umgebung und Extraktor bei in die Führungshülse eingefahrenem Extraktor weiter vermieden werden kann.

In Varianten kann aber auf die Übereinstimmung der Aussendurchmesser auch verzichtet werden. Zum Beispiel kann der Aussendurchmesser der Spitze kleiner sein als derjenige der Führungshülse. In diesem Fall kann ein Übergang vom distalen Führungshülsenende zur Spitze kreiskegelstumpfförmig abgeschrägt sein. Schliesslich kann die Spitze auch gerade dem Innendurchmesser der Führungshülse entsprechen. In diesem Fall kann die Wandung im distalen Bereich der Führungshülse kreiskegelstumpfförmig zugespitzt sein. Die Spitze könnte damit auch integraler Bestandteil des Extraktors sein und damit zum Beispiel als zugespitzter Glasstab mit chemisch aktiv beschichteter und/oder poröser Mantelfläche ausgebildet sein.

Vorzugsweise umfasst die Spitze einen Kreiskegel und proximal respektive rückseitig am Kreiskegel einen Kreiszylinderfortsatz, welcher einen Aussendurchmesser aufweist, der dem Innendurchmesser der Führungshülse entspricht. Damit kann der Kreiszylinderfortsatz als Verschluss in der Führungshülse dienen, sozusagen als kraftlos in die Führungshülse einführbaren Zapfen. Damit kann einerseits die Dichtwirkung zwischen Spitze und Führungshülse verbessert werden. Anderseits wird aber auch die Stabilität bei eingefahrenem Extraktor erhöht. Die Spitze selbst wird über die rückseitige, um den Kreiszylinderfortsatz gebildete Schulter in Führungsrichtung gestützt. Rechtwinklig zur Führungsrichtung wird die Spitze durch den Kreiszylinderfortsatz gestützt. Damit wird verhindert, dass Kraftwirkungen auf die eingefahrene Spitze direkt auf den das Extraktionsmittel umfassenden Bereich einwirken können.

In Varianten kann auf den Kreiszylinderfortsatz auch verzichtet werden.

Vorzugsweise umfasst der Extraktor einen Draht und einen Hohlkörper, wobei der Draht im Hohlkörper liegt. Mit dieser Ausbildung des Extraktors wird eine besonders stabile und robuste Extraktionsvorrichtung geschaffen. Der Draht dient dabei als Stütze für den Hohlkörper. Der Hohlkörper ist dabei vorzugsweise entweder selbst als Extraktionsmittel ausgebildet - zum Beispiel als Schlauch, poröse Glaskapillare oder dergleichen - oder umfasst das Extraktionsmittel - zum Beispiel in Form einer Beschichtung.

In Varianten kann auf den Draht auch verzichtet werden, insbesondere wenn die notwendige Stabilität des Extraktors anderweitig erreicht werden kann. Dies kann zum Beispiel durch eine grössere Querschnittsfläche oder durch die Materialwahl erreicht werden. So kann der Extraktor zum Beispiel einen Glasstab umfassen, welcher einen hinreichend grossen Durchmesser aufweist, so dass die Stabilität gegeben ist.

Dem Fachmann ist klar, dass der Hohlkörper mit dem Draht auch ohne Spitze am distalen Ende des Drahtes eingesetzt werden kann. Die Spitze kann auch durch einen einseitig, das heisst distal geschlossenen Hohlkörper gebildet werden. Zum Beispiel könnte eine solche Extraktionsvorrichtung im Wesentlichen eine Fiber mit einem eingelassenen Draht umfassen.

Weiter kann das Extraktionsmittel auch auf einem Träger, zum Beispiel einer Fiber, angeordnet sein, welche nicht als Hohlkörper ausgebildet ist, aber dennoch einen Draht zur Stützung der Fiber umfasst. In diesem Fall kann der Draht zum Beispiel parallel zur Fiber verlaufen, so dass die Fiber an zwei gegenüberliegenden Enden mit dem Draht verbunden ist. Insbesondere kann die Fiber auch in der Art einer Saite in einer C-förmigen Halterung aufgespannt respektive gehalten sein.

Vorzugsweise ist der Draht mit der Spitze verbunden. Damit kann der Hohlkörper, welcher das Extraktionsmittel umfasst, während dem Durchstechen der Trennschicht bezüglich einer Kraftwirkung in der Führungsrichtung entlastet werden. Beim Einstechen in die Trennschicht kann damit die Kraftübertragung von der Spitze über den Draht zu einer Betätigungsvorrichtung (Linearantrieb, zum Beispiel eine Spindel oder dergleichen) erfolgen. Diese Ausbildung ist besonders vorteilhaft bei filigranen oder zerbrechlichen Hohlkörpern. Die Spitze kann mit dem Draht verschweisst, verlötet, verschraubt oder anderweitig verbunden sein. Schliesslich kann die Spitze auch einstückig mit dem Draht ausgebildet sein.

In Varianten kann es ausreichen, wenn die Spitze lediglich in Berührungskontakt mit dem Draht steht, so dass nur in einer Führungsrichtung, in Richtung zur Trennschicht, eine Kraftentlastung erfolgen kann. In diesem Fall würde die Spitze mit dem Hohlkörper verbunden.

Bevorzugt umfasst der Extraktor einen rohrförmigen Mantel, wobei der Draht im rohrförmigen Mantel liegt, so dass der Hohlkörper zwischen der Spitze und dem Rohr angeordnet ist. Typischerweise umfasst der Hohlkörper das Extraktionsmittel. Der Hohlkörper ist daher über seine gesamte Länge aus der Führungshülse verfahrbar, so dass das Extraktionsmittel mit seiner gesamten Oberfläche mit dem Extraktionsgut interagieren kann. Aus diesem Grund weist der Extraktor vorzugsweise proximal hinter dem Hohlkörper einen rohrförmigen Mantel auf, so dass der Extraktor auch bei ausgefahrenem Hohlkörper noch hinreichend in der Führungshülse geführt ist.

Vorzugsweise ist der rohrförmige Mantel mit dem Hohlkörper verklebt, so dass sich weder ein Absatz noch ein Spalt zwischen dem Mantel und dem Hohlkörper bilden kann.

In Varianten kann auf den rohrförmigen Mantel verzichtet werden. In diesem Fall kann zum Beispiel der Hohlkörper länger ausgebildet sein und lediglich in einem vorderen Bereich mit einer aktiven Substanz beschichtet sein. Anderseits kann der Hohlkörper auch über die gesamte Länge beschichtet sein. In letzterem Fall würde für das Extraktionsverfahren kontrolliert, wie weit der Hohlkörper aus der Führungshülse geschoben ist. Damit könnte die Empfindlichkeit der Extraktion respektive Extraktionsleistung beeinflusst werden. Weiter kann der Draht proximal hinter dem Hohlkörper auch eine entsprechend dimensionierte Verdickung aufweisen, welche die Funktion des obig beschriebenen Mantels übernehmen kann.

Vorzugsweise ist der Draht aus Metall oder einer Metalllegierung, bevorzugt aus rostfreiem Stahl, insbesondere aus Chromstahl, ausgebildet. Damit wird eine besonders stabile Stützung der Spitze erreicht. Vorzugsweise ist der Draht chemisch inert. Die Spitze kann mit dem Draht verschweisst, verlötet, verschraubt oder anderweitig verbunden sein. Schliesslich kann die Spitze auch einstückig mit dem Draht ausgebildet sein.

In Varianten kann für den Draht auch ein Kunststoff, zum Beispiel ein faserverstärkter Kunststoff, eingesetzt werden. Die Anforderungen an die chemische Beständigkeit hängen vom Einsatz ab, insbesondere vom Extraktionsgut und der Matrix, und können daher variieren.

Bevorzugt entspricht ein Aussendurchmesser des rohrförmigen Mantels dem Aussendurchmesser des Hohlkörpers. Damit wird einerseits der Extraktor in der Führungshülse geführt - auch dann, wenn der Hohlkörper für die Extraktion aus der Führungshülse herausgefahren ist. Anderseits wird damit bei in die Führungshülse eingefahrenem Hohlkörper ein geringes Totvolumen erreicht, so dass möglichst kein Stoffaustausch mit der Umgebung innerhalb der Führungshülse erfolgen kann. Dem Fachmann ist klar, dass mit der Bezeichnung "entspricht" auch geringe Abweichungen der Aussendurchmesser umfasst sind. Typischerweise ist nämlich der Aussendurchmesser des Hohlkörpers geringfügig kleiner als derjenige des rohrförmigen Mantels, so dass eine aktive Beschichtung auf dem Hohlkörper beim Ein- und Ausfahren aus der Führungshülse geschont werden kann.

In Varianten kann der Aussendurchmesser des Mantels auch wesentlich, das heisst mehr als geringfügig, grösser sein als ein Aussendurchmesser des Hohlkörpers. Damit bleibt gewährleistet, dass der Extraktor nicht oder nicht ausschliesslich über den Hohlkörper geführt ist.

Vorzugsweise umfasst der Hohlkörper einen Schlauch, insbesondere einen Schrumpfschlauch. Der Schlauch besteht aus Silikon, insbesondere hochreinem Silikon respektive PDMS (Polydimethylsiloxan), Akrylat oder Carboxen. Um den Schlauch einfacher über den Draht führen zu können, kann dieser in einem Lösemittel aufgequollen werden, so dass der Innendurchmesser vergrössert wird. Anschliessend kann durch verdampfen oder verdunsten des Lösemittels der Schlauch wieder geschrumpft werden, womit der Schlauch auf dem Draht festsitzt. Damit wird ein besonders kostengünstiger Extraktor erreicht, welcher in einfacher Weise, durch das Quell- und Schrumpfverfahren montierbar ist.

In Varianten kann der Draht direkt beschichtet werden, wobei auf einen zusätzlichen Hohlkörper verzichtet würde. Weiter kann auch eine Kapillare aus einem anderen Material auf den Draht geführt sein, zum Beispiel eine Glaskapillare.

Bevorzugt umfasst der Extraktor eine physikalisch aktive Substanz. Damit kann die Extraktion optimiert werden. Die aktive Substanz kann dabei diverse Eigenschaften aufweisen, welche die Adsorption, je nach Extrakt, begünstigen können. Diese Eigenschaften umfassen unter anderem die Polarität und die Porengrössen. Diese Substanz kann bei einem Herstellungsverfahren eines Schlauchs zum Beispiel dem Ausgangsmaterial, insbesondere dem Silikon, beigemengt werden, um anschliessend den Schlauch herzustellen.

In Varianten kann der Extraktor auch eine chemisch aktive Substanz aufweisen, welche mit dem Extrakt eine reversible chemische Reaktion eingehen können.

Vorzugsweise umfasst die aktive Substanz wenigstens einen der folgenden Stoffe: Aktivkohle, Polyacrylat, Carbowax, Polydivinylbenzol, Carboxen, Polydimethylsiloxan.

Mit der Aktivkohle wird ein besonders kostengünstiges Adsorptionsmittel bereitgestellt, welches sich zudem durch eine besonders hohe spezifische Oberfläche auszeichnet. Je nach Anwendungsgebiet können aber auch weitere Stoffe als aktive Substanz eingesetzt werden.

Bevorzugt werden Adsorptionsmittel eingesetzt. Je nach Anwendung können aber auch Adsorptionsmittel als aktive Substanz vorgesehen sein.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: eine schematische Darstellung der Einzelteile einer Extraktionsvorrichtung;
- Fig. 2: eine schematische Darstellung einer Extraktionsvorrichtung in Transportstellung;
- Fig. 3: eine Extraktionsvorrichtung gemäss Figur 2 in Extraktionsstellung; und
- Fig. 4: eine schematische Darstellung einer alternativen Ausbildung einer Extraktionsvorrichtung in Transportstellung.

Grundsätzlich sind in den Figuren gleiche Teile mit gleichen Bezugszeichen versehen.

### Wege zur Ausführung der Erfindung

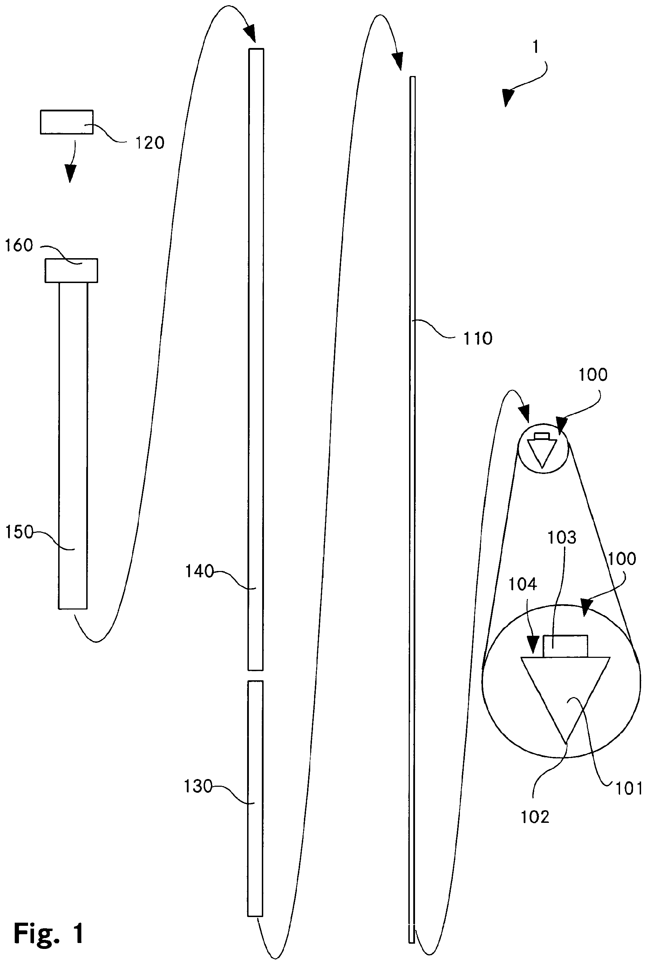

Die Figur 1 zeigt die einzelnen Bestandteile einer erfindungsgemässen Extraktionsvorrichtung 1. Diese umfasst eine Spitze 100, einen Draht 110, eine Fiber 130, einen rohrförmiger Mantel 140 und eine Führungshülse 150.

In der Figur 1 ist mit den Pfeilen angedeutet, wie die Extraktionsvorrichtung 1 zusammengesetzt werden kann.

Die Spitze 10 umfasst einen Kreiskegel 101, welcher rückseitig, das heisst auf der der Kegelspitze 102 abgewandten Seite, einen Kreiszylinderfortsatz 103 aufweist, welcher rechtwinklig zur Führungsrichtung einen kleineren Durchmesser aufweist als der Kreiskegel 101. Damit bildet sich zwischen dem Kreiskegel 101 und dem Kreiszylinderfortsatz 103 ein Absatz 104. Der Durchmesser des Kreiszylinderfortsatzes 103 entspricht dabei dem Innendurchmesser der Führungshülse 150. Die Spitze 100 besteht vorliegend aus rostfreiem Stahl und ist einstückig ausgebildet.

Der Draht 110 besteht ebenfalls aus rostfreiem Stahl und ist einseitig mit der Spitze 100 verschweisst.

Die Fiber 130 ist vorliegend als Schlauch 130, das heisst im Wesentlichen kreiszylindrisch, aus Silikon ausgebildet. Der Schlauch kann zusätzlich eine aktive Substanz enthalten. Letztere kann Aktivkohle umfassen. Der Schlauch dient als Extraktionsmittel zur Adsorption eines Extraktionsgutes in einer Matrix, welche zum Beispiel in einem mit einem Septum oder einer ähnlichen Trennschicht verschlossenen Probengefäss bereitgestellt sein kann (nicht dargestellt).

Der Schlauch 130 wird in einem Lösemittel aufgequollen und anschliessend über den Draht 110 geführt. Nach dem verdunsten oder verdampfen des Lösemittels schrumpft der Schlauch 130, so dass dieser durch den Draht 110 gestützt ist. Anschliessend wird der rohrförmige Mantel 140 über den Draht 110 geführt, womit der Schlauch 130 zwischen dem rohrförmigen Mantel 140 und Spitze 100 gehalten ist. Der rohrförmige Mantel 140 ist vorliegend ebenfalls kreiszylindrisch ausgebildet und hat denselben Aussendurchmesser wie der Schlauch 130. Der rohrförmige Mantel 140 besteht vorliegend aus einem Kunststoff.

Über den rohrförmigen Mantel 140 und der Schlauch 130 ist eine zylindrische Führungshülse 150 geführt, welche am proximalen Ende einen Flansch 160 umfasst. Über den Flansch 160 kann die Führungshülse 150 an einem zum Beispiel automatischen Analysengerät gehalten und/oder verfahren werden. Der Innendurchmesser der Führungshülse 150 entspricht dem Aussendurchmesser des Schlauchs 130 und dem Aussendurchmesser des Kreiszylinderfortsatzes 103. Der Aussendurchmesser der Führungshülse 150 entspricht dem Aussendurchmesser der Spitze 100.

Um den rohrförmigen Mantel 140 und damit der Schlauch 130 in Führungsrichtung zu sichern sowie um eine Handhabung zum Verfahren des Schlauchs 130 bereitzustellen, ist am proximalen Ende des Drahtes 110 ein Flansch 120 befestigt.

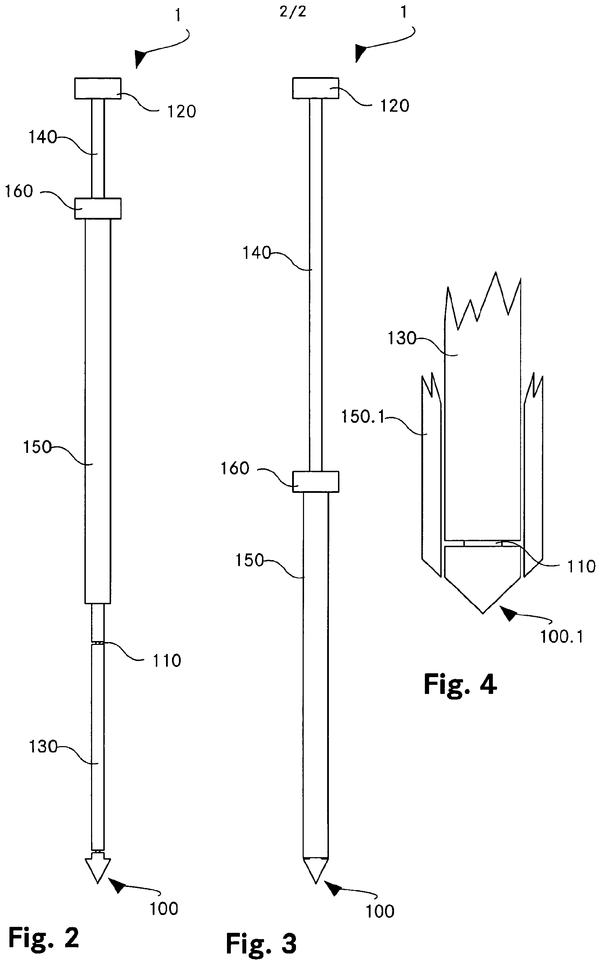

Die Figur 2 zeigt die Extraktionsvorrichtung 1 in einem Betriebszustand während der Extraktion oder während der Desorption respektive dem Verdampfen des Extraktes im Analysengerät. In diesem Zustand ist die Führungshülse 150 derart zurückgefahren, dass zwischen der Spitze 100 und der Führungshülse 150 der Schlauch 130 mit der aktiven Beschichtung zumindest teilweise freigelegt ist. In der vorliegenden Figur 2 ist der Schlauch 130 vollständig freigelegt.

Um während des Transportes der Extraktionsvorrichtung 1, insbesondere zu einem das Extraktionsgut enthaltenden Behälter oder zwischen Behälter und einem Analysengerät, ein Stoffaustausch mit der Umgebung respektive eine Beschädigung zu vermeiden, wird der Schlauch 130 gemäss Figur 3 mit der Spitze 100 über den Flansch 120 oder 160 in die Führungshülse 150 verfahren.

In diesem Zustand kann mit der Spitze 100 ein Setpum durchstochen werden. Die Spitze 100 wird dabei über die durch den Absatz 104 gebildete Schulter an der Führungshülse 150 in Führungsrichtung gestützt, während der Kreiszylinderfortsatz 103 innerhalb der Führungshülse 150 für die seitliche Stabilisierung rechtwinklig zur Führungsrichtung sorgt. Gleichzeitig wird damit der Innenraum der Führungshülse 150 durch den Absatz 104 der Spitze 100 dicht verschlossen.

Die Spitze 100 kann auch anderweitig mit dem Draht 110 verbunden werden. Zum Beispiel kann der Kreiszylinderfortsatz 103 mittig in Führungsrichtung eine Bohrung mit Innengewinde aufweisen, wobei der Draht 110 an einem Ende ein entsprechendes Aussengewinde aufweist, so dass der Draht 110 über eine Schraubverbindung mit der Spitze 100 verbunden werden kann. Weiter können der Draht 110 und die Spitze 100 auch einstückig ausgebildet sein.

Der Schlauch 130 kann auch aus einem anderen Material wie zum Beispiel einem Kunststoff gebildet sein und andere Beschichtungen, vorzugsweise mit grosser Oberfläche, wie zum Beispiel Silikagel (Kieselgel) oder dergleichen umfassen. Die Materialien werden typischerweise der Anwendung angepasst.

Die Spitze 100 muss nicht zwingend mit einem Draht 110 verbunden sein, auf Letzteren kann auch verzichtet werden. In diesem Fall würde eine herkömmliche Fiber ohne Drahtstabilisierung direkt mit der Spitze 100 verbunden.

Figur 4 zeigt eine alternative Ausführungsform einer Extraktionsvorrichtung, wobei ein distales Ende der Führungshülse 150.1 eine Aussenkontur eines Kreiskegelstumpfs aufweist, das heisst, die Führungshülse 150.1 ist am distalen Ende zugespitzt. Die Spitze 100.1 weist dabei einen Aussendurchmesser auf, welcher der Deckfläche des Kreiskegelstumpfs des distalen Endes der Führungshülse 150.1 entspricht. Die Spitze 100.1 weist die Form eines Kreiskegels auf, welcher an der Grundfläche einen Kreiszylinderfortsatz in proximaler Richtung umfasst, wobei der Kreiszylinderfortsatz denselben Durchmesser aufweist, wie der Kreiskegel. Auf den Kreiszylinderfortsatz kann aber auch verzichtet werden. Der Extraktor 130 weist in dieser Ausführungsform denselben Aussendurchmesser auf, wie die Spitze 100.1 und ist über einen Draht 110, welcher mit der Spitze 100.1 verbunden ist, geführt..

Zusammenfassend ist festzustellen, dass erfindungsgemäss eine Extraktionsvorrichtung geschaffen wird, welche in der Anwendung besonders robust und zuverlässig ist.

## Patentansprüche

1. Vorrichtung (1) zur Extraktion eines Extraktionsgutes, insbesondere für eine Festphasenmikroextraktion, umfassend einen Extraktor (130) und eine Spitze (100) zum Durchdringen einer Trennschicht, **dadurch gekennzeichnet, dass** der Extraktor (130) einen Draht umfasst, wobei der Draht mit der Spitze (100) verbunden ist.

2. Vorrichtung (1) nach Anspruch 1, **dadurch gekennzeichnet, dass** der Extraktor (130) einen Hohlkörper (130) umfasst, wobei der Draht (110) im Hohlkörper (130) liegt.

3. Vorrichtung (1) nach Anspruch 2, **dadurch gekennzeichnet, dass** der Hohlkörper (130) mit einer aktiven Substanz beschichtet ist'.

4. Vorrichtung (1) nach Anspruch 2, **dadurch gekennzeichnet, dass** der Draht (110), einstückig² mit der Spitze (100) verbunden ist.

5. Vorrichtung (1) nach Anspruch 2 oder 3, **dadurch gekennzeichnet, dass** der Extraktor (130) einen rohrförmigen Mantel (140) umfasst, wobei der Draht (110) im rohrförmigen Mantel (140) liegt, so dass der Hohlkörper (130) zwischen der Spitze (100) und dem rohrförmigen Mantel (140) angeordnet ist.

6. Vorrichtung (1) nach einem der Ansprüche 2 bis 4, **dadurch gekennzeichnet, dass** der Draht (110) aus Metall oder einer Metalllegierung, bevorzugt aus rostfreiem Stahl, insbesondere aus Chromstahl ausgebildet ist.

7. Vorrichtung (1) nach Anspruch 4 oder 5, **dadurch gekennzeichnet, dass** ein Aussendurchmesser des rohrförmigen Mantels (140) dem Aussendurchmesser des Hohlkörpers (130) entspricht.

8. Vorrichtung (1) nach einem der Ansprüche 2 bis 6, **dadurch gekennzeichnet, dass** der Hohlkörper (130) einen Schlauch, insbesondere einen Schrumpfschlauch umfasst, wobei der Schlauch insbesondere aus Silikon, hochreinem Silikon, Polydimethylsiloxan, AI<rylat oder Carboxen besteht³.

9. Vorrichtung (1) nach einem der Ansprüche 2 bis 6, **dadurch gekennzeichnet, dass** der Draht mit Silikon, hochreinem Silikon, Polydimethylsiloxan, AI<rylat oder Carboxen beschichtet ist⁴.

10. Vorrichtung (1) nach einem der Ansprüche 1 bis 7, **dadurch gekennzeichnet, dass** der Extraktor (130) eine physikalisch aktive Substanz umfasst.

11. Vorrichtung (1) nach Anspruch 8, **dadurch gekennzeichnet, dass** die physikalisch aktive Substanz wenigstens einen der folgenden Stoffe umfasst: Aktivkohle, Polyacrylat, Carbowax, Polydivinylbenzol, Carboxen, Polydimethylsiloxan.

12. Verfahren zur Extraktion eines Extraktionsgutes aus einem Behältnis mit einer Extraktionsvorrichtung (1) mit einer Extraktionsvorrichtung gemäss einem der Ansprüche 1 bis 10, wobei die folgenden Schritte durchgeführt werden:
- Durchdringen einer Trennschicht des Behältnisses mit einer Spitze (100) eines Extraktors (130);
- Extrahieren des Extraktionsgutes.
